# EUROPÄISCHE PATENTSCHRIFT

(11) **EP 3 728 901 B1**
(45) Veröffentlichungstag und Bekanntmachung des Hinweises auf die Patenterteilung: **23.07.2025**
(21) Anmeldenummer: 18811440.9
(22) Anmeldetag: 19.11.2018
(51) Int. Cl.: F16H 57/022, F16H 57/038, F16H 57/02, F16H 55/17

(54) **GETRIEBE MIT WINKELGETRIEBESTUFE UND VERFAHREN ZUR HERSTELLUNG EINER WINKELGETRIEBESTUFE**
TRANSMISSION WITH ANGULAR GEAR STAGE, AND METHOD FOR PRODUCING AN ANGULAR GEAR STAGE
BOÎTE DE VITESSES MUNIE D'UN ÉTAGE D'ENGRENAGES CONIQUES ET PROCÉDÉ DE FABRICATION D'UN ÉTAGE D'ENGRENAGES CONIQUES

(30) Priorität: 19.12.2017 DE 102017011743
(43) Veröffentlichungstag der Anmeldung: 28.10.2020
(73) Patentinhaber: SEW-EURODRIVE GmbH & Co. KG, 76646 Bruchsal (DE)
(72) Erfinder: HANNET, Stefan, 68723 Schwetzingen (DE)
(86) Internationale Anmeldenummer: PCT/EP2018/025293
(87) Internationale Veröffentlichungsnummer: WO 2019/120615

(56) Entgegenhaltungen:
- EP-A1- 3 072 785
- EP-A2- 2 695 796
- DE-A1- 102013 002 310
- US-A- 4 035 044

## Beschreibung

Die Erfindung betrifft ein Getriebe mit Winkelgetriebestufe und ein Verfahren zur Herstellung einer Winkelgetriebestufe.

Es ist allgemein bekannt, dass eine Winkelgetriebestufe eines Getriebes ein Verzahnungsteil und ein Zahnrad aufweist, wobei die Verzahnung des Verzahnungsteils in Eingriff ist mit der Verzahnung des Zahnrads.

**Aus der** EP 3 072 785 A1 **ist als nächstliegender Stand der Technik ein Steuersäulenassistenzsystem bekannt.** Das Dokument EP 3072 785 A1 offenbart ein Getriebe, welches ein Zahnrad und ein Verzahnungsteil aufweist, das mit einer eintreibenden Welle des Getriebes, drehfest verbunden und/oder einstückig, insbesondere einteilig, ausgeführt ist, 1
wobei die Verzahnung des Zahnrads und die Verzahnung des Verzahnungsteils miteinander im Eingriff sind,
wobei die Welle und/oder das Verzahnungsteil über Lager gelagert ist, welche in einer zweiten Buchse aufgenommen sind,
wobei die zweite Buchse in einer ersten Buchse aufgenommen ist,
wobei die erste Buchse in einem Gehäuseteil aufgenommen ist, wobei die erste Buchse eine außenzylindrisch geformten Bereich aufweist, dessen Zylinderachse beabstandet und parallel ist zu einer Zylinderachse eines innenzylindrisch geformten Bereichs der ersten Buchse, an welchem die zweite Buchse aufgenommen ist und/oder anliegt,
wobei die zweite Buchse eine außenzylindrisch geformten Bereich aufweist, dessen Zylinderachse beabstandet und parallel ist zu einer Zylinderachse eines innenzylindrisch geformten Bereichs der zweiten Buchse, insbesondere an welchem die Lager aufgenommen sind.

**Aus der** US 4 035 044 A **ist eine Lageranordnung bekannt.**

### Aus der EP 2 695 796 A2 ist ebenfalls ein Steuersäulenassistenzsystem bekannt.

### Aus der DE 10 2013 002310 A1 ist eine Leistungsübertragungsvorrrichtung bekannt.

Der Erfindung liegt daher die Aufgabe zugrunde, eine Winkelgetriebestufe einfach herstellbar zu machen.

Erfindungsgemäß wird die Aufgabe bei der Winkelgetriebestufe nach den in Anspruch 1 angegebenen Merkmalen gelöst.

Wichtige Merkmale der Erfindung bei dem Getriebe mit Winkelgetriebestufe sind, dass sie ein Zahnrad und ein Verzahnungsteil aufweist, dass mit einer Welle, insbesondere eintreibenden Welle des Getriebes, drehfest verbunden und/oder einstückig, insbesondere einteilig, ausgeführt ist,
insbesondere wobei die Verzahnung des Zahnrads und die Verzahnung des Verzahnungsteils miteinander im Eingriff sind,
wobei die Welle und/oder das Verzahnungsteil über Lager gelagert ist, welche in einer zweiten Buchse aufgenommen sind,
wobei die zweite Buchse in einer ersten Buchse aufgenommen ist,
wobei die erste Buchse in einem Gehäuseteil aufgenommen ist,
wobei die erste Buchse einen außenzylindrisch geformten Bereich aufweist, dessen Zylinderachse beabstandet und parallel ist zu einer Zylinderachse eines innenzylindrisch geformten Bereichs der ersten Buchse, insbesondere an welchem die zweite Buchse aufgenommen ist und/oder anliegt,
wobei die zweite Buchse einen außenzylindrisch geformten Bereich aufweist, dessen Zylinderachse beabstandet und parallel ist zu einer Zylinderachse eines innenzylindrisch geformten Bereichs der zweiten Buchse, insbesondere an welchem die Lager aufgenommen sind.

Von Vorteil ist dabei, dass zwei exzentrische Buchsen das Lager der Welle aufnehmen und somit die Welle verschiebbar ist, insbesondere bei Verdrehung der beiden Buchsen gegeneinander ist ein lineares Verschieben ermöglicht und somit ein Einstellen des Abstandes entlang einer Linie.

**Erfindungsgemäß** weist die erste Buchse einen radial hervorstehenden Kragenbereich auf, in welchem axial durchgehende Ausnehmungen, insbesondere Langlöcher, eingebracht sind,

insbesondere wobei die Langlöcher auf dem jeweils selben Radialabstandsbereich angeordnet sind. Von Vorteil ist dabei, dass nach dem Einstellen des Abstandes mittels einer Schraube die Kragenbereiche und somit auch die Buchsen festlegebar sind.

**Erfindungsgemäß** weist die zweite Buchse einen radial hervorstehenden Kragenbereich auf, in welchem axial durchgehende Ausnehmungen, insbesondere Langlöcher, eingebracht sind, insbesondere wobei die Langlöcher auf dem jeweils selben Radialabstandsbereich angeordnet sind. Von Vorteil ist dabei, dass nach dem Einstellen des Abstandes mittels einer Schraube die Kragenbereiche und somit auch die Buchsen festlegebar sind.

Bei einer vorteilhaften Ausgestaltung umfasst der von den Ausnehmungen der ersten Buchse überdeckte Radialabstandsbereich den von den Ausnehmungen der zweiten Buchse überdeckten Radialabstandsbereich, diesem gleicht oder mit diesem überlappt. Von Vorteil ist dabei, dass die zweite Buchse innerhalb der ersten Buchse aufgenommen ist.

**Erfindungsgemäß** ist ein Schraubteil durch eine der Ausnehmungen des Kragens der ersten Buchse und durch eine der Ausnehmungen des Kragens der zweiten Buchse hindurchgeführt,

insbesondere wobei das Schraubteil in eine Gewindebohrung des Gehäuseteils zumindest teilweise eingeschraubt ist, wobei ein Schraubenkopf des Schraubteils oder eine auf das Schraubteil aufgeschraubte Mutter den Kragen der ersten Buchse auf den Kragen der zweiten Buchse drückt, insbesondere welcher auf das Gehäuseunterteil gedrückt wird. Von Vorteil ist dabei, dass die beiden Kragen zusammen befestigbar sind.

Wichtige Merkmale bei dem Verfahren zur Herstellung einer Winkelgetriebestufe sind, dass vor Festlegen der Buchsen mittels Anziehen des Schraubteils und/oder der Mutter die Drehstellung der ersten und zweiten Buchse derart eingestellt werden, dass bei konstantem Abstand der Drehachse des Verzahnungsteils, insbesondere Kegelrads, zur Drehachse des Zahnrads der Abstand zwischen der Drehachse des Verzahnungsteils und dem Zahnrad eingestellt wird, insbesondere verändert wird.

Von Vorteil ist dabei, dass eine einfache Befestigung mittels des Schraubteils ausführbar ist.

**Erfindungsgemäß** bleibt der konstante Abstand der Drehachse des Verzahnungsteils zur Drehachse des Zahnrads dadurch eingehalten, indem die erste Buchse in gegenseitiger Abhängigkeit zum Drehen der zweiten Buchse gedreht wird, insbesondere also die Drehstellung der ersten Buchse abhängig von der Drehstellung der zweiten Buchse bewirkt wird. Von Vorteil ist dabei, dass ein lineares Verändern des Abstandes ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein Querschnitt durch eine ein Tellerrad 1 und ein Kegelrad 2 aufweisende Winkelgetriebestufe eines Ausschnitts eines Getriebes dargestellt.
In der Figur 2 ist eine Schrägansicht auf die Winkelgetriebestufe dargestellt.
In der Figur 3 ist die maximal erreichbare Verschiebung Y_max durch zwei zueinander extremale Drehstellungen zweier Buchsen (3, 4) der Winkelgetriebestufe dargestellt.

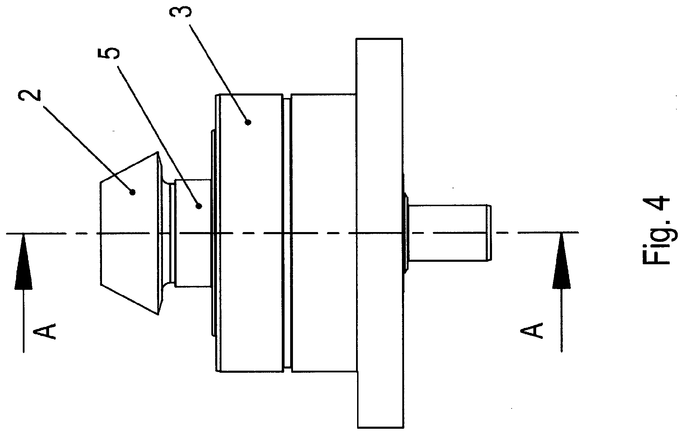

In der Figur 4 ist eine Seitenansicht der Winkelgetriebestufe dargestellt.
In der Figur 5 ist ein Querschnitt durch die Winkelgetriebestufe dargestellt, welcher die Achse des Kegelrads 2 enthält.
In der Figur 6 ist eine Schrägansicht auf die erste der Buchsen 3 dargestellt.
In der Figur 7 ist eine Draufsicht auf die erste der Buchsen 3 dargestellt.
In der Figur 8 ist eine Schrägansicht auf die zweite der Buchsen 4 dargestellt.
In der Figur 9 ist eine Draufsicht auf die zweite der Buchsen 4 dargestellt.
In der Figur 10 ist ein Längsschnitt durch die Winkelgetriebestufe des Ausschnitts des Getriebes dargestellt.

Wie in den Figuren dargestellt, weist ein erfindungsgemäßes Getriebe eine Winkelgetriebestufe auf, insbesondere eine Hypoidstufe.

Die Winkelgetriebestufe weist ein Kegelrad 2 auf, dessen Verzahnung im Eingriff ist mit der Verzahnung des Tellerrads 1 der Winkelgetriebestufe.

Das Tellerrad 1 ist drehfest mit einer Welle des Getriebes, insbesondere mit der abtreibenden Welle des Getriebes, verbunden und über Lager in einem Gehäuseteil 6 des Getriebes gelagert, wobei das Gehäuseteil 6 einteilig oder mehrteilig ausführbar ist.

Das Kegelrad 2 ist drehfest mit der Welle 5, insbesondere eintreibenden Welle 5 des Getriebes, verbunden und über Lager in einer zweiten Buchse 4 gelagert, welche in einer ersten Buchse 3 aufgenommen ist, welche in einer durchgehenden Ausnehmung des Gehäuseteils 6 aufgenommen ist.

Dabei ist die zweite Buchse 4 bei der Montage relativ zur ersten Buchse 3 drehbar angeordnet. Hierzu liegt ein außenzylindrisch ausgeformter Bereich der zweiten Buchse 4 an dem innenzylindrisch ausgeformten Bereich der ersten Buchse 3 an. Ebenso liegt ein auenzylindrisch geformter Bereich der ersten Buchse 3 an der Ausnehmung des Gehäuseteils 6 an, welche als Bohrung ausgeführt ist, insbesondere also innenzylindrisch geformt ist.

Die Buchsen 3 und 4 weisen an ihrem jeweiligen axialen Endbereich jeweils einen radial hervorstehenden Kragen auf, in welchem axial durchgehende Langlöcher 7 vorgesehen sind und Vertiefungen 8, in welche ein Werkzeug eingreifen kann zur Bewirkung einer Drehung der jeweiligen Buchse (3, 4).

Der von dem Kragen der ersten Buchse 3 überdeckte Radialabstandsbereich umfasst den vom Kragen der zweiten Buchse 4 überdeckten Radialabstandsbereich. Außerdem umfasst der vom Kragen der ersten Buchse 3 überdeckte axiale Bereich den vom Kragen der zweiten Buchse 4 überdeckten axialen Bereich. Somit umfasst der Kragen der ersten Buchse 3 den Kragen der zweiten Buchse 4.

Die Buchse 3 ist exzentrisch ausgeführt. Hierzu ist die Zylinderachse des außenzylindrischen Bereichs der ersten Buchse 3 beabstandet von der Zylinderachse des innenzylindrischen Bereichs der ersten Buchse 3, wobei diese beiden Zylinderachsen parallel zueinander ausgerichtet sind. Die Beabstandung der beiden Zylinderachsen ist geringer als ein Zehntel des Durchmessers des außenzylindrischen Bereichs der ersten Buchse 3. Somit bewegt sich bei Drehung der ersten Buchse 3 um die Zylinderachse des außenzylindrisch geformten Bereichs die Zylinderachse des innenzylindrischen Bereichs auf einem Kreis, dessen Radius der Beabstandung entspricht.

Auch die zweite Buchse 4 ist exzentrisch ausgeführt. Hierzu ist die Zylinderachse des außenzylindrischen Bereichs der zweiten Buchse 4 beabstandet von der Zylinderachse des innenzylindrischen Bereichs der zweiten Buchse 4, wobei diese beiden Zylinderachsen parallel zueinander ausgerichtet sind. Die Beabstandung der beiden Zylinderachsen ist geringer als ein Zehntel des Durchmessers des außenzylindrischen Bereichs der zweiten Buchse 3. Somit bewegt sich bei Drehung der zweiten Buchse 4 um die Zylinderachse des außenzylindrisch geformten Bereichs die Zylinderachse des innenzylindrischen Bereichs auf einem Kreis, dessen Radius der Beabstandung entspricht, wobei die Normale der zum Kreis gehörenden Kreisebene parallel zu den Zylinderachsen ist.

Der vom innenzylindrisch geformten Bereich der zweiten Buchse 4 in axialer Richtung überdeckte Bereich umfasst auch den vom außenzylindrisch geformten Bereich der zweiten Buchse 4 in axialer Richtung überdeckten Bereich.

Der vom innenzylindrisch geformten Bereich der ersten Buchse 3 in axialer Richtung überdeckte Bereich umfasst auch den vom außenzylindrisch geformten Bereich der ersten Buchse 3 in axialer Richtung überdeckten Bereich.

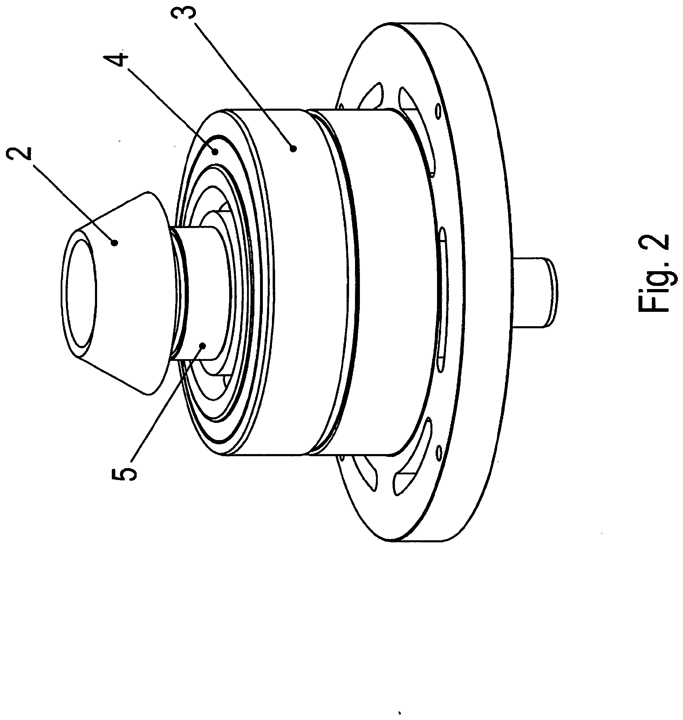

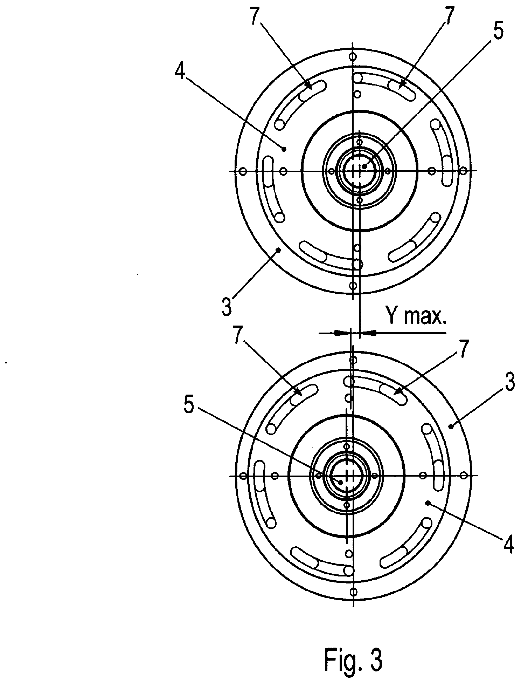

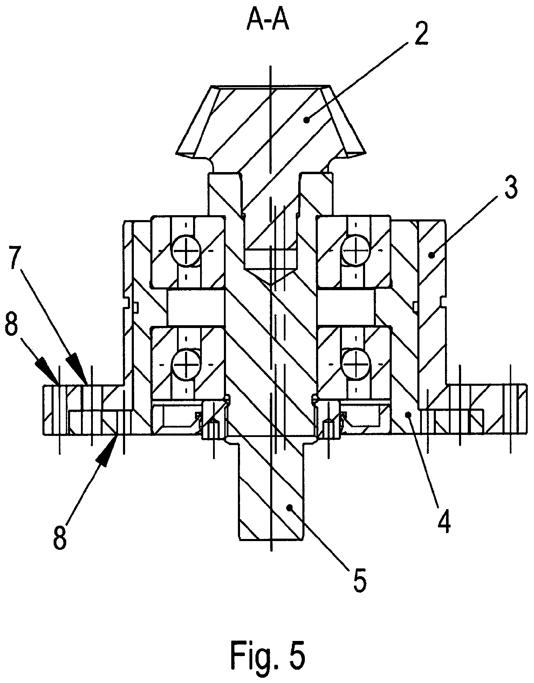

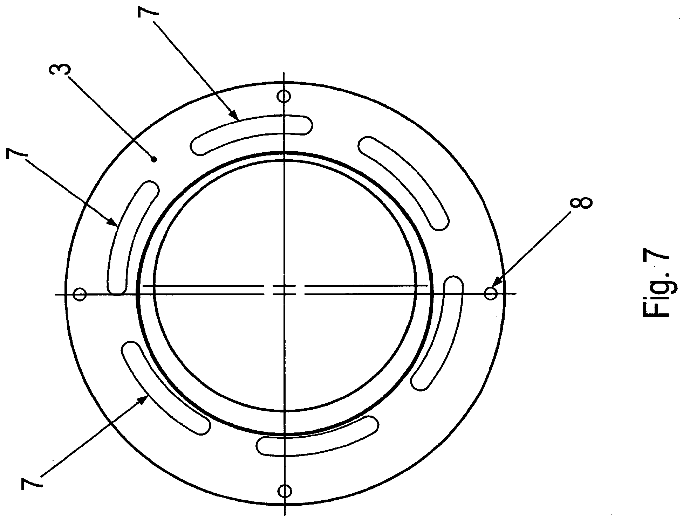

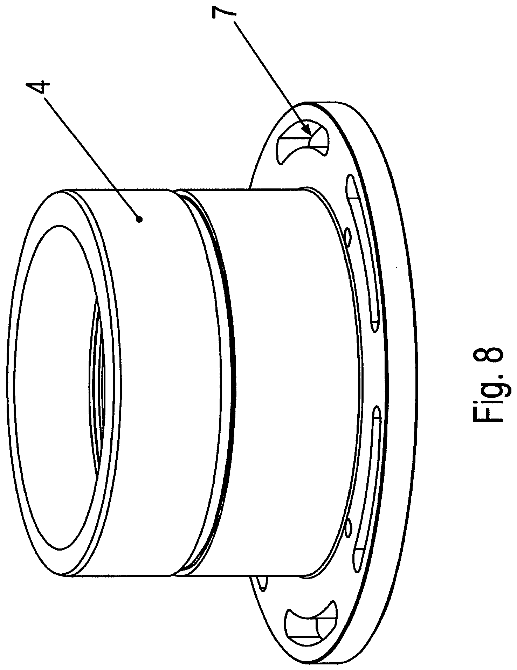

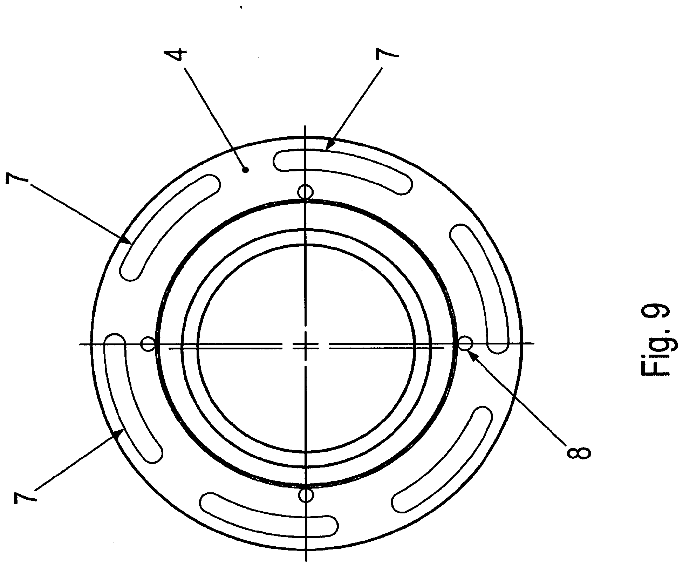

Wie in Figur 2, 3, 5, 6 bis 9 gezeigt, weisen die Kragen derartige durchgehende Langlöcher auf, dass in axialer Richtung eine Schraube durchführbar ist und somit die beiden Kragen zusammen gegen das Gehäuseteil 6 drückbar sind. Hierbei drückt der Schraubenkopf der Schraube auf den Kragen der ersten Buchse 3, welcher wiederum auf den Kragen der zweiten Buchse 4 drückt, welcher gegen eine Auflagefläche am Gehäuseteil drückt.

Wenn also die Drehungen der ersten Buchse 3 und der zweiten Buchse 4 bei der Herstellung beendet sind, wird die durch die Langlöcher durchgeführte Schraube mit ihrem Gewindeabschnitt in die ins Gehäuseteil 6 eingebrachte Gewindebohrung eingeschraubt. Dabei ist die Gewindebohrung in axialer Richtung gerichtet.

Die Langlöcher der ersten und zweiten Buchse (3, 4) sind also auf demselben Radialabstand angeordnet und überlappen einander in Umfangsrichtung. In axialer Richtung grenzen die Langlöcher der ersten Buchse 3 an die Langlöcher der zweiten Buchse 4.

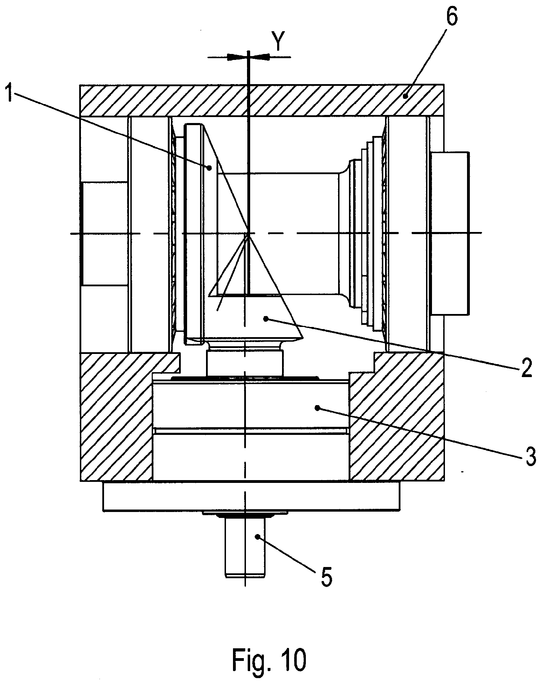

Wie in Figur 10 gezeigt, soll der Abstand Y, also der Abstand des Kegelrads 2 zum Tellerrad 1 in Richtung der Achse des Tellerrads 1, eingestellt werden, indem die erste Buchse 3 und zweite Buchse 4 in eine entsprechende Drehstellung gebracht werden.

Werden die Drehstellungen der beiden Buchsen 3 und 4 in gegenseitiger Abhängigkeit geeignet ausgeführt, ist es ermöglicht, den Abstand Y zwischen den beiden Extremalwerten +Y_max und -Y_max insbesondere linear zu variieren. Somit ist also während der Veränderung des Abstandes Y der Abstand X konstant.

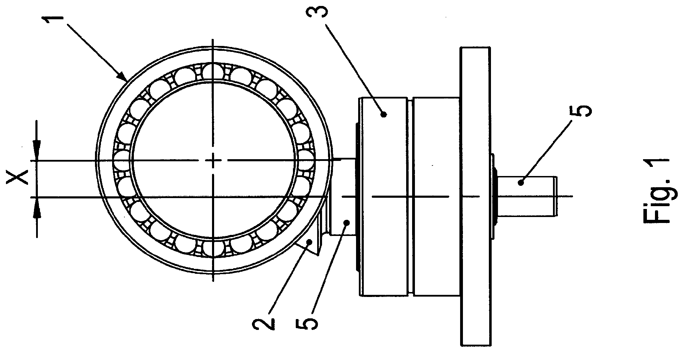

Wie in Figur 1 in Zusammenschau mit Figur 10 klar dargestellt, bewirkt bei konstantem Abstand X die Veränderung des Abstandes Y eine Verschiebung der Drehachse des Verzahnungsteils 2 in einer Ebene, welche mit dem Abstand X beabstandet ist zur Drehachse des Zahnrads 1 und welche parallel ist zu der Drehachse des Zahnrads 1.

In Figur 10 ist die kegelige Fortsetzung der Einhüllenden der Verzahnung des Verzahnungsteils 2 und die kegelige Fortsetzung der Einhüllenden der Verzahnung des Zahnrads 1 gestrichelt dargestellt. Somit ist die Drehachse des Verzahnungsteils 2 beabstandet von dem eigentlichen Zahnrad 1, wobei dieser Abstand der bei der Montage des Getriebes einzustellende Abstand Y ist.

Vorzugsweise wird ein die Welle 5 des Verzahnungsteils 2 antreibender Elektromotor mit seinem Gehäuse an der zweiten Buchse 4 zentriert und/oder festgelegt. Somit ist das Verzahnungsteil 2 zum Motor hin korrekt ausgerichtet - insbesondere unabhängig von dem Abstand Y.

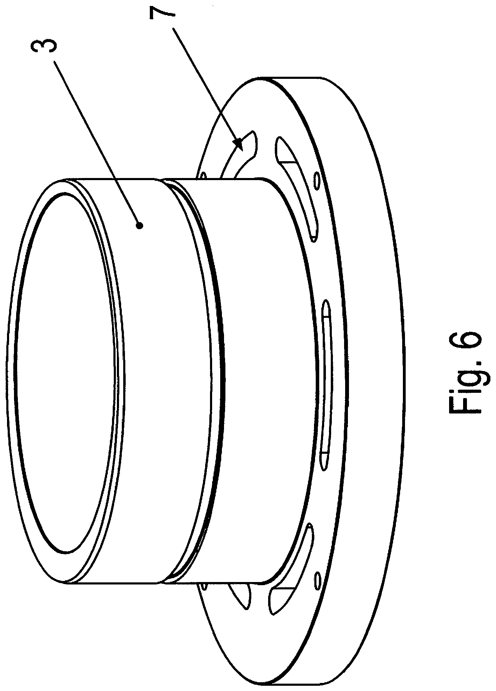

Wie in Figur 6 bis 9 dargestellt, sind die Langlöcher 7 in Umfangsrichtung regelmäßig voneinander beabstandet und jeweils gleichartig ausgeführt, insbesondere überdecken sie in Umfangsrichtung jeweils den selben Umfangswinkelbereich.

Die erste Buchse 3 ist als Hohlteil ausgeformt, an deren vom Verzahnungsteil 2 axial abgewandten Endbereich der Kragenbereich radial hervorragt. Somit liegt der Kragenbereich am Gehäuseteil 6 an und fungiert somit auch als axiale Begrenzung.

Die zweite Buchse 4 ist als Hohlteil ausgeformt, an deren vom Verzahnungsteil 2 axial abgewandten Endbereich der Kragenbereich radial hervorragt. Somit liegt der Kragenbereich der zweiten Buchse 4 am Kragenbereich der ersten Buchse 3 an und begrenzt somit die zweite Buchse 4.

Da beide Buchsen (3, 4) bei Herstellung, also vor Festziehen der durch die Langlöcher hindurchgeführten Schraube, noch drehbar sind, sind die Drehstellungen in gegenseitiger Abhängigkeit einstellbar und zwar derart, dass der in Figur 1 gezeigte Abstand X, also der Abstand der Drehachse des Kegelrads 2 zur Drehachse des Tellerrads 1, konstant bleibt.

Somit ist also reine Veränderung des Abstandes Y erreicht werden, ohne dass der Abstand X verändert wird.

Falls jedoch zusätzlich auch der Abstand X etwas angepasst werden muss, beispielsweise zum Ausgleichen von Fertigungstoleranzen, ist dies ebenfalls durch Wahl der geeigneten Werte der beiden Drehstellungen ermöglicht.

In der zweiten Buchse 4 sind zwei Lager aufgenommen, deren Außenringe den innenzylindrisch geformten Bereich der zweiten Buchse 4 berühren und mittels einer nach radial innen hervorstehenden Verdickung voneinander axial beabstandet sind.

Das Kegelrad 2 ist mit der Welle 5, also eintreibenden Welle 5, drehfest verbunden, insbesondere als Einsteckritzel und/oder mit Passfederverbindung.

Außerdem ist ein Wellendichtring von dem innenzylindrisch geformten Bereich der zweiten Buchse 4 aufgenommen, dessen Dichtlippe auf der Welle 5 läuft.

Vorzugsweise ist das Tellerrad 1 aus Bronze oder Stahl gefertigt, das Kegelrad 2 ist vorzugsweise aus Stahl gefertigt. DAS Kegelrad weist vorzugsweise eine derartige Verzahnung auf, dass die Winkelgetriebestufe als Hypoidstufe ausführbar ist.

Das Getriebe ist vorzugswiese zweistufig oder mehrstufig ausgeführt. Dabei ist das Tellerrad drehfest mit einer Welle verbunden, welche wiederum drehfest mit einem weiteren Verzahnungsteil, insbesondere evolventenverzahntes Stirnrad, einer weiteren Getriebestufe des Getriebes verbunden ist.

Bei weiteren erfindungsgemäßen Ausführungsbeispielen sind die vorgenannten Buchsen 3 und 4 jeweils auch als Hülsen bezeichenbar.

Der jeweilige außenzylindrisch geformte Bereich ist durch eine zylindrische Oberfläche gekennzeichnet. Ebenso ist der innenzylindrisch geformte Bereich durch eine zylindrische Oberfläche gekennzeichnet.

Bei weiteren erfindungsgemäßen Ausführungsbeispielen wird die Winkelgetriebestufe als Kegelgetriebestufe ausgeführt. Alternativ ist die Winkelgetriebestufe als Spiroplangetriebestufe ausgeführt, wobei dann das Kegelrad als Spiroplanritzel ausgeführt wird und das Tellerrad entsprechend bogenförmig verlaufende Zähne aufweist.

### Bezugszeichenliste

1 Tellerrad
2 Kegelrad
3 erste Buchse, insbesondere erste Exzenterbuchse
4 zweite Buchse, insbesondere zweite Exzenterbuchse
5 Welle, insbesondere eintreibende Welle
6 Gehäuseteil
7 Langloch für Befestigungsschraube
8 Vertiefung für Werkzeug

## Patentansprüche

1. Getriebe mit Winkelgetriebestufe,
welche ein Zahnrad (1) und ein Verzahnungsteil (2) aufweist, das mit einer Welle (5), insbesondere eintreibenden Welle (5) des Getriebes, **der Winkelgetriebestufe** drehfest verbunden und/oder einstückig, insbesondere einteilig, ausgeführt ist,
insbesondere wobei die Verzahnung des Zahnrads und die Verzahnung des Verzahnungsteils miteinander im Eingriff sind,
wobei
die Welle (5) und/oder das Verzahnungsteil **über Lager der Winkelgetriebestufe** gelagert ist, welche in einer zweiten Buchse **(4) der Winkelgetriebestufe** aufgenommen sind,
wobei die zweite Buchse **(4)** in einer ersten Buchse **(3) der Winkelgetriebestufe** aufgenommen ist,
wobei die erste Buchse **(3)** in einem Gehäuseteil (6) **der Winkelgetriebestufe** aufgenommen ist,
wobei die erste Buchse **(3)** einen außenzylindrisch geformten Bereich aufweist, dessen Zylinderachse beabstandet und parallel ist zu einer Zylinderachse eines innenzylindrisch geformten Bereichs der ersten Buchse **(3),** insbesondere an welchem die zweite Buchse **(4)** aufgenommen ist und/oder anliegt,
wobei die zweite Buchse **(4)** einen außenzylindrisch geformten Bereich aufweist, dessen Zylinderachse beabstandet und parallel ist zu einer Zylinderachse eines innenzylindrisch geformten Bereichs der zweiten Buchse **(4),** an **welchem die Lager aufgenommen sind,**
**wobei die erste Buchse (3) einen radial hervorstehenden Kragenbereich aufweist, in welchem axial durchgehende Langlöcher** (7) **eingebracht sind,**
**wobei die Langlöcher auf dem jeweils selben Radialabstandsbereich angeordnet sind, wobei die zweite Buchse (4) einen radial hervorstehenden Kragenbereich aufweist, in welchem axial durchgehende Langlöcher** (7) **eingebracht sind, welche auf dem jeweils selben Radialabstandsbereich angeordnet sind,**
**die Langlöcher der ersten und zweiten Buchse (3, 4) auf demselben Radialabstand angeordnet sind und einander in Umfangsrichtung überlappen,**
**wobei in axialer Richtung die Langlöcher der ersten Buchse (3) an die Langlöcher der zweiten Buchse (4) angrenzen,**
**wobei ein Schraubteil durch eine der Langlöcher des Kragens der ersten Buchse (3) und durch eine der Langlöcher des Kragens der zweiten Buchse (4) hindurchgeführt ist.**

2. Getriebe mit Winkelgetriebestufe nach Anspruch 1,
**dadurch gekennzeichnet, dass**
der von den **Langlöchern** der ersten Buchse **(3)** überdeckte Radialabstandsbereich den von den **Langlöchern** der zweiten Buchse **(4)** überdeckten Radialabstandsbereich umfasst, diesem gleicht oder mit diesem überlappt.

3. Getriebe mit Winkelgetriebestufe nach einem der Ansprüche 1 oder 2,
**dadurch gekennzeichnet, dass**
das Schraubteil in eine Gewindebohrung des Gehäuseteils (6) zumindest teilweise eingeschraubt ist, wobei ein Schraubenkopf des Schraubteils oder eine auf das Schraubteil aufgeschraubte Mutter den Kragen der ersten Buchse auf den Kragen der zweiten Buchse drückt, insbesondere welcher auf das Gehäuseunterteil gedrückt wird.

4. Verfahren zur Herstellung eines Getriebes mit Winkelgetriebestufe nach mindestens einem der vorangegangenen Ansprüche,
**wobei** vor Festlegen der Buchsen mittels Anziehen des Schraubteils und/oder der Mutter die Drehstellung der ersten (3) und zweiten (4) Buchse derart eingestellt werden, dass bei konstantem Abstand in X-Richtung der Drehachse des Verzahnungsteils (2), insbesondere Kegelrads (2), zur Drehachse des Zahnrads der Abstand in Y-Richtung zwischen der Drehachse des Verzahnungsteils und dem Zahnrad eingestellt wird, **also** verändert wird,
wobei
**der konstante Abstand** in X- Richtung **der Drehachse des Verzahnungsteils zur Drehachse des Zahnrads dadurch eingehalten bleibt, indem die erste Buchse in gegenseitiger Abhängigkeit zum Drehen der zweiten Buchse gedreht wird,**
**also die Drehstellung der ersten Buchse abhängig von der Drehstellung der zweiten Buchse bewirkt wird.**

## Claims

1. A gear unit with a right-angled gear stage,
which has a gear wheel (1) and a gearing part (2) which is non-rotatably connected to, and/or embodied in one piece, in particular in one part, with, a shaft (5), in particular input shaft (5) of the gear unit, of the right-angled gear stage,
in particular wherein the gearing of the gear wheel and the gearing of the gearing part are engaged with each other,
wherein
the shaft (5) and/or the gearing part is/are borne by way of bearings of the right-angled gear stage which are received in a second bush (4) of the right-angled gear stage,
wherein the second bush (4) is received in a first bush (3) of the right-angled gear stage,
wherein the first bush (3) is received in a housing part (6) of the right-angled gear stage,
wherein the first bush (3) has an externally cylindrically shaped region, the cylinder axis of which is spaced apart from and parallel to a cylinder axis of an internally cylindrically shaped region of the first bush (3), in particular on which region the second bush (4) is received and/or rests,
wherein the second bush (4) has an externally cylindrically shaped region, the cylinder axis of which is spaced apart from and parallel to a cylinder axis of an internally cylindrically shaped region of the second bush (4), on which region the bearings are received,
wherein the first bush (3) has a radially projecting collar region in which are formed axially uninterrupted elongate holes (7),
wherein the elongate holes are arranged on the same radial distance region in each case,
wherein the second bush (4) has a radially projecting collar region in which are formed axially uninterrupted elongate holes (7) which are arranged on the same radial distance region in each case, the elongate holes of the first and second bush (3, 4) are arranged at the same radial distance and overlap each other in the circumferential direction,
wherein in the axial direction the elongate holes of the first bush (3) adjoin the elongate holes of the second bush (4),
wherein a screwing part is passed through one of the elongate holes in the collar of the first bush (3) and through one of the elongate holes in the collar of the second bush (4).

2. A gear unit with a right-angled gear stage according to claim 1,
**characterised in that**
the radial distance region covered by the elongate holes in the first bush (3) encompasses, is identical to or overlaps with the radial distance region covered by the elongate holes in the second bush (4).

3. A gear unit with a right-angled gear stage according to one of claims 1 or 2, **characterised in that**
the screwing part is at least partially screwed into a threaded bore in the housing part (6), with a screw head of the screwing part or a nut screwed onto the screwing part pressing the collar of the first bush onto the collar of the second bush, in particular which collar is pressed onto the lower housing part.

4. A method for producing a gear unit with a right-angled gear stage according to at least one of the preceding claims,
wherein, prior to fixing the bushes by means of tightening the screwing part and/or the nut, the rotary positions of the first (3) and second (4) bush are set such that, while the distance in the X direction of the axis of rotation of the gearing part (2), in particular bevel gear (2), from the axis of rotation of the gear wheel is constant, the distance in the Y direction between the axis of rotation of the gearing part and the gear wheel is set, i.e. is changed,
wherein
the constant distance in the X direction of the axis of rotation of the gearing part from the axis of rotation of the gear wheel is maintained in that the first bush is rotated in mutual dependence on the rotation of the second bush,
therefore the rotary position of the first bush is brought about dependent on the rotary position of the second bush.

## Revendications

1. Transmission avec étage de transmission angulaire, qui présente une roue dentée (1) et une partie dentée (2) reliée de manière solidaire en rotation et/ou réalisée d'un seul tenant, en particulier d'une seule pièce, avec un arbre (5), en particulier avec un arbre d'entraînement (5) de la transmission, de l'étage de transmission angulaire, la denture de la roue dentée et la denture de la partie dentée étant en particulier en prise l'une avec l'autre,
l'arbre (5) et/ou la partie dentée étant mis sur palier par l'intermédiaire de paliers de l'étage de transmission angulaire qui sont logés dans une seconde douille (4) de l'étage de transmission angulaire,
la seconde douille (4) étant logée dans une première douille (3) de l'étage de transmission angulaire,
la première douille (3) étant logée dans une partie carter (6) de l'étage de transmission angulaire,
la première douille (3) présentant une région en forme de cylindre extérieur dont l'axe de cylindre est espacé et parallèle à un axe de cylindre d'une région en forme de cylindre intérieur de la première douille (3), en particulier au niveau de laquelle est logée et/ou repose la seconde douille (4),
la seconde douille (4) présentant une région en forme de cylindre extérieur, dont l'axe de cylindre est espacé et parallèle à un axe de cylindre d'une région en forme de cylindre intérieur de la seconde douille (4) au niveau de laquelle sont logés les paliers, la première douille (3) présentant une région de collerette faisant saillie radialement et au sein de laquelle sont ménagés des trous allongés (7) axialement traversants,
les trous allongés étant agencés sur la même région d'espacement radial respective, la première douille (4) présentant une région de collerette faisant saillie radialement et au sein de laquelle sont ménagés des trous allongés (7) axialement traversants,
qui sont agencés sur la même région d'espacement radial respective,
les trous allongés des première et seconde douilles (3, 4) étant agencés sur le même espacement radial et se chevauchant dans la direction circonférentielle,
les trous allongés de la première douille (3) étant adjacents aux trous allongés de la seconde douille (4) dans la direction axiale,
une partie vissée étant passée à travers un des trous allongés de la collerette de la première douille (3) et à travers un des trous allongés de la collerette de la seconde douille (4).

2. Transmission avec étage de transmission angulaire selon la revendication 1, **caractérisée en ce que**
la région d'espacement radial couverte par les trous allongés de la première douille (3) comprend la région d'espacement radial couverte par les trous allongés de la seconde douille (4), lui ressemble ou la chevauche.

3. Transmission avec étage de transmission angulaire selon l'une quelconque des revendications 1 ou 2,
**caractérisée en ce que**
la partie vissée est vissée au moins partiellement dans un alésage fileté de la partie carter (6), une tête de vis de la partie vissée ou un écrou vissé sur la partie vissée pressant la collerette de la première douille sur la collerette de la seconde douille, laquelle est en particulier pressée sur la partie inférieure de carter.

4. Procédé de fabrication d'une transmission avec un étage de transmission angulaire selon l'une quelconque des revendications précédentes,
la position de rotation des première (3) et seconde (4) douilles étant ajustée avant la fixation des douilles par serrage de la partie vissée et/ou de l'écrou, de telle manière que l'espacement dans la direction Y entre l'axe de rotation de la partie dentée et la roue dentée est ajusté, c'est-à-dire modifié, pour un espacement constant dans la direction X entre l'axe de rotation de la partie dentée (2), en particulier de la roue conique (2), et l'axe de rotation de la partie dentée,
l'espacement constant dans la direction X entre l'axe de rotation de la partie dentée et l'axe de rotation de la roue dentée étant maintenu en faisant tourner la première douille en dépendance mutuelle par rapport à la rotation de la seconde douille, c'est-à-dire que la position de rotation de la première douille est provoquée en fonction de la position de rotation de la seconde douille.
